# EUROPEAN PATENT APPLICATION

(11) **EP 3 828 145 A1**
(43) Date of publication of application: **02.06.2021**
(21) Application number: 19840428.7
(22) Date of filing: 25.07.2019
(51) Int. Cl.: C02F 9/14, C02F 3/34, C02F 1/72, C02F 1/10, C02F 3/10

(54) **THIOSALT BIO-OXIDATION METHOD**

(30) Priority: 25.07.2018 ES 201830759
(71) Applicant: Universidad De Sevilla, 41013 Sevilla (ES)
(72) Inventor: CARRANZA MORA, Francisco, 41013 SEVILLA (ES); ROMERO ALETA, Rafael, 41013 SEVILLA (ES); IGLESIAS GONZÁLEZ, Nieves, 41013 SEVILLA (ES); MAZUELOS ROJAS, Alfonso, 41013 SEVILLA (ES)
(74) Representative: Pons
(86) International application number: PCT/ES2019/070525
(87) International publication number: WO 2020/021148

(57) **Abstract**

The present invention relates to a method for removing thiosalts in process waters, such as those from concentrating metallic sulfides ores by means of crushing and flotation, which comprises a step of acidification in ventilated conditions in the presence of Cu(II) followed by bio-oxidation in a flooded packed-bed bioreactor characterised in that it is performed using microorganisms of the genus *Acidithiobacillus.*

## Description

The present invention relates to a method for removing thiosalts in process waters, such as those from concentrating metallic sulfur ores by means of crushing and flotation, which comprises a step of acidification in ventilated conditions in the presence of Cu(II) followed by bio-oxidation in a flooded packed-bed bioreactor characterised in that it is performed using microorganisms of the genus *Acidithiobacillus.*

Therefore, the present invention belongs to the knowledge areas of Chemical Engineering and Biotechnology, particularly to the mining-metallurgical activity sector in production plants of metal sulfur mineral concentrates by means of grinding and flotation methods.

### BACKGROUND OF THE INVENTION

Liquors in industrial grinding and flotation plants for concentrating metallic sulfur ores can accumulate thiosalts, particularly when they contain pyrite (Druschel et al, Kinetics and Mechanism of Trithionate and Tetrathionate Oxidation at Low pH by Hydroxyl Radicals. Aquatic Geochemistry 2003, 00: 1(20). In this case, it is necessary to purge the thiosalts of the circuit since, from certain concentrations, the presence thereof adversely affects the selectivity of the flotation.

Thiosalts are metastable chemical species that oxidise spontaneously with air, eventually forming sulfuric acid (Vongporm, 2008 Thiosalt behavior in aqueous media. MEng Thesis: Memorial University of Newfoundland). In developed countries, the effluent of process liquors containing thiosalts is restricted because it is associated with an increase in acidity and a decrease in the concentration of dissolved oxygen in the recipient body (Dinardo and Sally, 1998 Treatment of thiosalts in milling effluent: A review of treatment process: Mining and Mineral Sciences Laboratories Report presented at Thiosalts Consortium-Phase II).

Removing thiosalts in process waters enables the reuse and/or discharge thereof. This is possible by means of the oxidation of the thiosalts to sulfuric acid and the correction of the acidity generated by adding alkaline substances (Dinardo and Sally, 1998; Kuyucak, Mining, the environment and the treatment of mine effluents. International Journal of Environment and Pollution, 1998, 10, 315-325 Kuyucak Waste Processing and Recycling IV, 2001, 481-495; Lu et al., Inorg. Chem. 2010, 49, 6026-6034). Thiosalt oxidation in solution has been tested by applying direct and indirect photolytic methods; ultrasonic irradiation; adsorption on iron hydroxides; use of various oxidising agents such as ozone, oxygen, hydrogen peroxide mixture SO₂ - air, Fe³⁺ - O₂ and use of microbial catalysts. Of all these options, the most widely used industrially is that of natural oxidation by means of lagooning.

Hydrogen peroxide oxidation is possible using mild operating conditions, being a fast and efficient process that does not incorporate foreign substances to the medium that need to be removed later; however, it requires using Fenton reagent (Fe(II) + H₂O₂) due to kinetic conditioning factors (Lu et al., 2010), which removes the advantage described above.

Natural oxidation in ponds is the most common industrial practice for the removal of thiosalts in process waters (Dinardo and Sally, 1998; Kuyucak, 1998, Kuyucak et al 2001). It is a passive treatment, without reagent and energy input requirements, in which the native bacterial flora catalyses the oxidation of thiosalts with air. The ponds consist of large depressions in the ground with a large volume and large surface area. Being out in the open, there is a significant dependence between the efficiency of natural oxidation in ponds and weather conditions (Montes-Rosúa, Hydrometallurgy 2018, 178, 37-42). Likewise, difficulties for the transfer of oxygen from the air to somewhat deep areas of the ponds, contributes to very slow kinetics.

Two laboratory-scale fixed-bed bioreactors have been described for performing continuous bio-oxidation of thiosalts:
- Percolation irrigation fixed-bed bioreactor for thiosulfate bio-oxidation (Liljevqvist Biotechnology and Bioengineering, 2011, Vol. 108, No. 6). Two types of bed have been used: active carbon particles and structured plastic material. The bioreactor is inoculated with the ferro-oxidant species *Acidithiobacillus ferrivorans* previously adapted to thiosulfate metabolisation. The bioreactor is fed from the upper portion with a solution containing thiosulfate and from the lower portion with air enriched in carbon dioxide. Continuous operation requires the external contribution of microorganisms and does not reach stationary states. The maximum rate of thiosulfate bio-oxidation is 0.32 Kg/h·m³ when the bed is activated carbon and 0.12 Kg/h·m³ when the bed is plastic material.
- Flooded packed-bed bioreactor for ferrous ion bio-oxidation (Mazuelos et al Mineral Eng. 1999, 12, 559-564) adapted in situ to metabolise tetrathionate (Iglesias et al En: International Journal of Mineral Processing. 2016, Vol. 155. P. 91-98). The bed is made up of silica sand particles designed for ferrous bio-oxidation and equipped with ferro-oxidising biofilms; when the reactor reaches stationary state in ferrous bio-oxidation, the feed is replaced by a solution of synthetic potassium tetrathionate.

Thus, it would be desirable to have an efficient and controlled method for removing thiosalts from the waters for concentrating metallic sulfides ores in order to be able to reuse and/or discharge the process waters, that is less expensive and that does not entail an environmental and visual impact.

### DESCRIPTION OF THE INVENTION

The object of this invention is the development of a method for removing thiosalts in plant waters such as those coming from installations for concentrating metallic sulfides. These waters consist of acid solutions containing mixtures of thiosalts such as polythionates, thiosulfate, and sulfite.

In a first aspect, the present invention relates to a method for removing thiosalts in process waters from concentrating metallic sulfides ores by means of grinding and flotation, comprising the following steps:
a) chemical step in which thiosulfate is removed by means of disproportionation in an acid medium and in which sulfite is removed by means of an oxidation reaction with oxygen catalysed by cupric ion, obtaining waters containing polythionates in the absence of thiosulfate and sulfite;
b) biological step for removing thiosalts from the waters resulting from step (a) by means of bio-oxidation using microorganisms of the genus *Acidithiobacillus,* and preferably *Acidithiobacillus thiooxidans,* at a temperature between 10°C and 34°C, in flooded fixed-bed bioreactors generating sulfuric acid and sulfate as products.

Thus, the present invention describes a method for thiosalt oxidation in real liquors of industrial plants, which consists of two steps. A chemical step of acidification of liquors in the presence of cupric ion in ventilated conditions, which results in the disproportionation of thiosulfate to sulfite and elemental sulfur, and the subsequent oxidation of the generated sulfite to sulfate. And a biological step for the bio-oxidation of the rest of thiosalts (polythionates) in fixed-bed bioreactors containing microorganisms of the genus *Acidithiobacillus* adhered on particles. Regarding the methods applied so far or in development phase, this invention enables the oxidation of thiosalts mixtures in industrial liquors in the fastest, most efficient, controllable and cheapest way, without the need to use expensive reagents such as hydrogen peroxide and being respectful to the environment.

Another embodiment of the invention relates to the method as defined above, wherein the process waters are characterised in that they are acid solutions containing mixtures of thiosalts in concentrations of up to 8 g/l.

The waters that can be treated by means of this method can contain thiosalts in concentrations up to 8 g/l. Out of these 8 g/l, thiosulfate concentration can be up to 1 g/l, the rest of thiosalts being: sulfite and polythionates (mainly trithionate, tetrathionate and pentathionate).

Another embodiment of the invention relates to the method as defined above, wherein the process waters are characterised in that they are acid solutions containing mixtures of thiosalts in concentrations of up to 8 g/l of which up to 1 g/l of thiosalts corresponds to thiosulfate and the rest of thiosalts correspond to sulfite and polythionates, and preferably sulfite and polythionates selected from trithionate, tetrathionate and pentathionate.

Typically, the pH value is less than 4. Ca in a concentration less than 1.5 g/l and heavy metals and metalloids (such as Cu, Fe, Co, Mn, Zn and As) in a concentration less than 0.2 g/l can be added.

Another embodiment of the invention relates to the method as defined above, wherein in step (a) acidification is performed to a pH close to 1.5 by adding sulfuric acid in the presence of cupric ion in concentration comprised between 5 and 20 mg/l by adding copper sulfate, which is performed continuously or discontinuously, in a reactor or a cascade of ventilated stirred tank reactors in series. The chemical step is performed continuously or discontinuously and can be performed at room temperature in a reactor or a cascade of ventilated "stirred tank reactors in series. In this step, copper sulfate and sulfuric acid are added to the waters to be treated, until reaching a cupric ion concentration between 5 and 20 mg/l and a pH close to 1.5 in the final mixture.

The added acid catalyses the thiosulfate disproportionation reaction to sulfite and elemental sulfur.

*S₂O₃=* + *2 H⁺* → *H₂SO₃* + *S* ΔG=-1.49 kcal/mol.

The added copper catalyses the air oxidation of the generated sulfite to sulfate.

*SO₃²⁻* + *½ O₂* → *SO₄*^{*2*-}

Following these guidelines, the operation time or the residence time in the reactor or reactors for completely removing thiosulfate and sulfite is less than 10 hours.

Another embodiment of the invention relates to the method as defined above, wherein the operation time of step (a) is less than 10 h.

Although the optimum operating temperature for step (b) is around 34 °C, the recommended operating temperature must not exceed this value, since at 40 °C, the efficiency of bio-oxidation for the mentioned microorganisms, is nil.

Another embodiment of the invention relates to the method as defined above, wherein the temperature at which step (b) is performed is between 10 °C and 34 °C, and preferably 34 °C.

Another embodiment of the invention relates to the method as defined above, wherein step (b) is performed in a packed-bed bioreactor with two differentiated contiguous areas: a lower area lacking a bed through which the feed fluids (air and liquor containing thiosalts) enter and mix and, on top of it, an upper area containing the bed consisting of discrete particles arranged at random.

The liquor and the air, forming bubbles, ascend through the bed. The liquid leaves the bioreactor through the spigot located in the upper portion of the bed area.

The liquors that feed the bioreactor cannot contain polythionates and thiosulfate together. Mixtures of these ions severely and irreversibly inhibit microbial action.

The biological step is performed in a continuous packed-bed bioreactor. In this bioreactor two contiguous areas can be distinguished:
- A lower area, lacking a bed, called the mixing area. Spigots for the inlet of air and liquor from the chemical step are located therein.
- An upper area, which houses the bed, called the bed area. Randomly packed particles are located therein. The shape of the particles can be diverse, preferably pseudo-spherical- or cube-shaped. The material of the particles can be silica sand, other ceramic materials, glass and plastic materials, preferably polyurethane foam. The particles rest on a support permeable to the passage of liquid and air.

The microbial population in the bioreactor is mainly made up of sulfooxidant species of the genus *Acidithiobacillus* (preferably *Acidithiobacillus thiooxidans*). The cells can be suspended in the liquid medium and mainly supported on the particles of the bed.

Another embodiment of the invention relates to the method as defined above, wherein the bed support as well as any element of the reactor in contact with the liquid cannot be made of metallic materials with a sulfate-reducing nature.

Another embodiment of the invention relates to the method as defined above, wherein a bed of particles of material inert to the medium is used.

Another embodiment of the invention relates to the method as defined above, wherein the bed of particles of material inert to the medium is selected from activated carbon, pyrolytic carbon, polyurethane, silica sand, ceramic materials, glass and plastic materials.

Another embodiment of the invention relates to the method as defined above, wherein a packed-bed bioreactor is used in which the flow of air and liquid is ascending; the latter flooding the entire bed and emerging from the upper portion thereof.

Another embodiment of the invention relates to the method as defined above, wherein the start-up of the fixed-bed bioreactors is performed in two consecutive steps:
i) inoculation, wherein the bed particles are brought into contact with active inoculum of cells of the genus *Acidithiobacillus* and liquor, the thiosalts being oxidised; and
ii) recirculation wherein the bioreactor is connected to a tank that stores liquor containing mixtures of polythionates in the absence of thiosulfate and sulfite and the content of both devices is recirculated with complete thiosalt oxidation.

The start-up of the bioreactor follows a protocol that takes place in two steps:
- Inoculation. In this step, the bed is impregnated with active inoculum with a volume of at least 10% of the hollow volume of the bioreactor. Subsequently, with the ventilation connected, feed liquor is added to fill up the volume of the bioreactor. This step ends when the thiosalts are exhausted.
- Recirculation: The bioreactor is connected, by means of conduits for this purpose, with a stirred tank containing feed liquor, with a volume of at least half the volume of the bioreactor. A pump drives the exchange of liquors between the bioreactor and the stirred tank in a closed circuit, in recirculation. This step ends when the thiosalts are completely exhausted.

The correct implementation of this protocol leads to start-up times of less than one week; once it ends, the bioreactor can operate continuously.

Operating continuously, the bioreactor is fed with liquor treated in the chemical step. The outlet liquor of the bioreactor contains mostly sulfuric acid and sulfate; bio-oxidation partially or totally exhausts thiosalts from the chemical step. The bio-oxidation of tetrathionate, usually the most stable and abundant thiosalt, takes place through the following chemical equation.

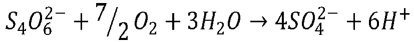

Another embodiment of the invention relates to the method as defined above, wherein step (b) ceases to be fully or partially operative when the feed contains thiosulfate in addition to polythionates.

Another embodiment of the invention relates to the method as defined above, wherein step (b) ceases to be fully or partially operative when it experiences an interruption of air supply.

Another embodiment of the invention relates to the method as defined above, wherein the interruption of the air supply can have an irreversible effect.

The start-up of the bioreactor follows a protocol that takes place in two steps:
- Inoculation. In this step, the bed is impregnated with active inoculum with a volume of at least 10% of the hollow volume of the bioreactor. Subsequently, with the ventilation connected, feed liquor is added to fill up the volume of the bioreactor. This step ends when the thiosalts are exhausted.
- Recirculation: The bioreactor is connected, by means of conduits for this purpose, with a stirred tank containing feed liquor, with a volume of at least half the volume of the bioreactor. A pump drives the exchange of liquors between the bioreactor and the stirred tank in a closed circuit, in recirculation. This step ends when the thiosalts are completely exhausted.

The correct implementation of this protocol leads to start-up times of less than ten days; once it ends, the bioreactor can operate continuously.

Operating continuously, the bioreactor is fed with liquor treated in the chemical step. The outlet liquor of the bioreactor contains mostly sulfate; bio-oxidation partially or totally exhausts thiosalts from the chemical step. The bio-oxidation of tetrathionate, usually the most stable and abundant thiosalt, takes place through the following chemical equation:

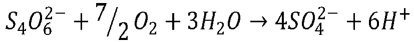

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration, and are not intended to limit the present invention.

### BRIEF DESCRIPTION OF THE FIGURES

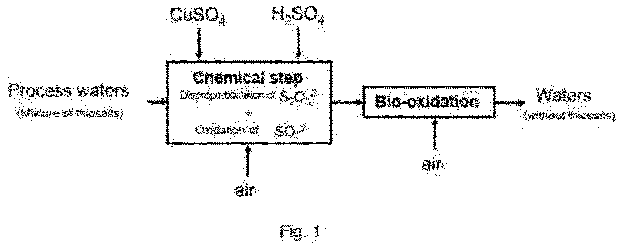

**FIG. 1** Conceptual diagram of the method object of this invention for removing thiosalts in industrial plant waters for concentrating metallic sulfur minerals. This method consists of two steps in series, a chemical one, ventilated with the addition of sulfuric acid and copper sulfate, for removing thiosulfate using disproportionation and sulfite using oxidation catalysed by Cu(II), and a biological one, for aerobic bio-oxidation in a packed-bed bioreactor populated by microorganisms of the genus *Acidithiobacillus.*

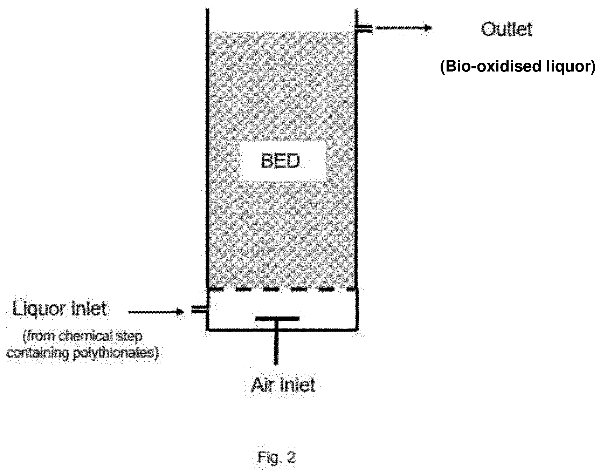

**FIG. 2** Schematic view of a fixed-bed bioreactor for polythionate mixtures bio-oxidation using microorganisms of the genus Acidithiobacillus supported on the bed. It consists of two portions: a hollow lower portion for the inlet and mixture of liquor to be bio-oxidised and air, and another one, on top of the previous one, consisting of a bed of randomly packed particles.

### EXAMPLES

The invention is illustrated below by means of tests performed by the inventors, that demonstrate the effectiveness of the method of the invention.

### Method for bio-oxidising thiosalts contained in a liquor from a plant for concentrating metallic sulfides minerals

### Example 1:

The liquor used in the method initially has a total thiosalt concentration of 3761 mg/l. The thiosulfate concentration is 317 mg/l and the pH is 2.81.

The aforementioned method consists of two consecutive steps, the first chemical and the second biological (Figure 1).

### Chemical step

The chemical step is performed in two stirred and ventilated polypropylene tanks, connected in series operating continuously. The volume of each reactor is 200L, the feed flow rate being 60 L/h. In the first reactor, the pH is adjusted with sulfuric acid to 1.52 and copper sulfate is added to achieve a Cu(II) concentration of 20 mg/l. At the outlet of the second reactor there is no thiosulfate, the concentration of total thiosalts being 3186 mg/l and the pH 1.56. This step is performed at room temperature.

### Biological step

The liquor collected in the chemical step is led to a packed-bed bioreactor. This bioreactor consists of a vertical hollow methacrylate column 2 m in height and 6.4 cm in diameter in which two contiguous areas can be distinguished (Figure 2):
- a lower area, lacking a bed, called the mixing area. The mixing area is 7 cm in height. Spigots for air and liquor inlet from the chemical step are located therein; and
- an upper area, which houses the fixed bed, called the bed area. The bed area is 193 cm in height. The bed is made up of polyurethane foam cubic particles with 1 cm/side, 23 kg/m³ density and 0.985 internal porousness, packed randomly. The bed is supported on a plastic grid of 0.4 porousness located on the border of the mixing and bed areas wherein the particles rest. In the highest portion of the bed area there is a spigot for the overflow liquor outlet.

The bioreactor start-up process takes place at a temperature between 10 °C and 34 °C and lasts 3 days. It is performed in the two steps described below:
- Impregnation step. The bed is watered with 1L of inoculum. The inoculum consists of a culture enriched by successive reseeding from the native microbial flora of the process waters. The dominant microorganism in the inoculum is *Acidithiobacillus thiooxidans.* The rest of the volume of the bioreactor is occupied by liquor from the chemical step and by air bubbles. The ventilation flow rate is 836 ml/min.
- Recirculation step. The outlet of the bioreactor is connected through conduits with a tank containing 8L of liquor from the chemical step. The liquor contained in the tank is driven by a pump feeding the bioreactor. All this results in a closed circuit for the recirculation of the liquors. Once the thiosalts are exhausted, the circuit is opened and the bioreactor begins to operate continuously, being fed by the liquor processed in the chemical step.

Continuous operation takes 40 days. When the flow rate of liquor is 881 ml/h and that of air is 836 ml/min, a concentration of thiosalts is reached at the outlet of the bioreactor of 0.48 g/l, the bio-oxidation rate of the thiosalts in the bioreactor being 2.38 g/h (0.37 Kg/h·m³).

### Example 2:

Similar to the previous example, introducing modifications in the compositions of the liquors and the sizes of equipment. This is how a liquor is treated that initially contains a total thiosalt concentration of 6800 mg/l, of which 850 mg/l are thiosulfate ion and 108 mg/l are sulfite ion. The pH is 2.80. The chemical step is performed at room temperature by adding 20 mg/l of cupric ion to the liquor. When the pH is adjusted to 1.5 with sulfuric acid, the thiosulfate and the sulfite are removed in 6 hours and when the pH is adjusted to 1.25, thiosulfate and sulfite are removed in 4 hours. The biological step is performed in a bioreactor that consists of a vertical hollow methacrylate column of 8.4 cm in diameter in which the mixing area (Figure 2) is 5 cm in height and the bed area is 10 cm in height. The bed is made up of polyurethane foam cubic particles with 1 cm/side, 25 kg/m³ density and 0.985 internal porousness. The bed is supported on a plastic grid of 0.4 porousness located on the border of the mixing and bed areas wherein the particles rest. This bioreactor is inoculated with 80 ml of a culture the predominant microbiological species of which is *Acidithiobacillus thiooxidans,* the rest of the volume of the bioreactor being occupied with liquor from the chemical step and air bubbles. In continuous operation, liquor treated in the chemical step is fed at a flow rate of 129 ml/h, the concentration of total thiosalts at the outlet of the bioreactor being 1760 mg/l and the pH 1.37.

## Claims

1. A method for removing thiosalts in process waters from concentrating metallic sulfide ores by means of crushing and flotation, comprising the following steps:
a. chemical step in which thiosulfate is removed by means of disproportionation in an acid medium and in which sulfite is removed by means of an oxidation reaction with oxygen catalysed by cupric ion, obtaining waters containing polythionates in the absence of thiosulfate and sulfite;
b. biological step for removing thiosalts from the waters resulting from step (a) by means of bio-oxidation using microorganisms of the genus *Acidithiobacillus,* at a temperature between 10°C and 34°C, in flooded packed-bed bioreactors generating sulfuric acid and sulfate as products.

2. The method according to claim 1, wherein the process waters are **characterised in that** they are acid solutions containing mixtures of thiosalts in concentrations of up to 8 g/l.

3. The method according to any of claims 1 or 2, wherein in step (a) acidification is performed to a pH close to 1.5 by adding sulfuric acid in the presence of cupric ion in concentration comprised between 5 and 20 mg/l by adding copper sulfate, which is performed continuously or discontinuously, in a reactor or a cascade of ventilated stirred tank series reactors.

4. The method according to any of claims 1 to 3, wherein step (b) is performed in a packed-bed bioreactor with two differentiated contiguous areas: a lower area lacking a bed through which the feed fluids (air and liquor containing thiosalts) enter and mix and, on top of it, an upper area containing the bed consisting of discrete particles arranged at random.

5. The method according to any of claims 1 to 4, wherein the bed support as well as any element of the reactor in contact with the liquid cannot be made of metallic materials with a sulfate-reducing nature.

6. The method according to any of claims 1 to 5, wherein a bed of particles of material inert to the medium is used.

7. The method according to claim 6, wherein the bed of particles of material inert to the medium is selected from activated carbon, pyrolytic carbon, polyurethane, silica sand, ceramic materials, glass and plastic materials.

8. The method according to any of claims 1 to 7, wherein a packed-bed bioreactor is used in which the flow of air and liquid is ascending; the latter flooding the entire bed and emerging from the upper portion thereof.

9. The method according to any of claims 1 to 8, wherein the start-up of the fixed-bed bioreactors is performed in two consecutive steps:
i) inoculation, wherein the bed particles are brought into contact with active inoculum of cells of the genus *Acidithiobacillus* and liquor, the thiosalts being oxidised; and
ii) recirculation, wherein the bioreactor is connected to a tank that stores liquor containing mixtures of polythionates in the absence of thiosulfate and sulfite and the content of both devices is recirculated with complete oxidation of the thiosalts.

10. The method according to any of claims 1 to 9, wherein step (b) ceases to be fully or partially operative when the feed contains thiosulfate in addition to polythionates.

11. The method according to any of claims 1 to 9, wherein step (b) ceases to be fully or partially operative when it experiences an interruption of air supply.

12. The method according to claim 11, wherein the interruption of the air supply can have an irreversible effect.
